# EUROPEAN PATENT APPLICATION

(11) **EP 4 566 854 A1**
(43) Date of publication of application: **11.06.2025**
(21) Application number: 24217034.8
(22) Date of filing: 03.12.2024
(51) Int. Cl.: B60H 1/00

(54) **HEATING AND/OR AIR-CONDITIONING DEVICE FOR A MOTOR VEHICLE**

(30) Priority: 05.12.2023 IT 202300025896
(71) Applicant: DENSO THERMAL SYSTEMS S.p.A., 10046 Poirino (Torino) (IT)
(72) Inventor: DESTEFANIS, Riccardo, I-10046 POIRINO (Torino) (IT); CERRATO, Marco, I-10046 POIRINO (Torino) (IT); SEJA, Paolo, I-10046 POIRINO (Torino) (IT)
(74) Representative: Vanzini, Christian

(57) **Abstract**

A heating and/or air-conditioning device for a motor vehicle, comprising a mixing section and an air distribution means interposed between the mixing section and a plurality of air outlets (38b) of the heating and/or air-conditioning device, wherein the air distribution means comprises an enclosure that divides a mixing zone of the heating and/or air-conditioning device into a main chamber and a stratification funnel (54c) enclosed by the enclosure, the enclosure divides an outlet (38b) of the heating and/or air-conditioning device into a main outlet (38b') fluidically connected with the main chamber and a secondary outlet (38b") fluidically connected with the stratification funnel (54c), and associated with the outlet (38b) is an outlet door (60), comprising a main door sector (60') and a secondary door sector (60"), operable to close or open the main outlet (38b') and the secondary outlet (38b"), respectively.

## Description

This invention relates to a heating and/or air-conditioning device for a motor vehicle, comprising
a mixing section comprising an air transmission branch and an air heating branch, both supplied by an air inlet and communicating with each other through a mixing zone, and mixing means configured to distribute an air flow between the air transmission branch and the air heating branch, wherein said mixing means are movable between two extreme positions, comprising a closed position wherein communication is prevented between the air inlet and the mixing zone through the air heating branch and force the air flow to pass through the air transmission branch, and an open position wherein communication is prevented between the air inlet and the mixing zone through the air transmission branch and force the air flow to pass through the air heating branch;
air distribution means interposed between the mixing section and a plurality of air outlets of the heating and/or air-conditioning device, said air distribution means being operable to control the distribution of the air flow between said air transmission branch and air heating branch and at least one of said air outlets.

Devices of this type are known, wherein the mixing means include different types of flaps, which are generally configured to oscillate between two extreme positions, namely a "full hot" position and a "full cold" position, and to occupy a plurality of intermediate positions. The treated air flow is generated by a fan placed upstream of the air inlet.

An object of the present invention is to provide a solution to improve the stratification of the air flow that moves from the mixing zone to the air outlets of the heating and/or air-conditioning device.

This object is achieved according to the invention with a device as per claim 1. In this device, said air distribution means comprise an enclosure arranged at the mixing zone, said enclosure dividing the mixing zone into a main chamber and a stratification funnel enclosed by said enclosure, whereby the air flow can be divided into a main flow fraction passing through the main chamber and a secondary flow fraction passing through the stratification funnel;
wherein said enclosure divides at least one of said outlets into a main outlet fluidically connected with the main chamber and a secondary outlet fluidically connected with the stratification funnel;
wherein at least one of said outlets is associated with an outlet door, comprising a main door sector and a secondary door sector operable to close or open said main outlet and said secondary outlet, respectively;
wherein said stratification funnel comprises a chamber and further includes a first distribution inlet and a second distribution inlet facing the chamber and respectively connected with the air transmission branch and the air heating branch, and at least one distribution outlet facing the chamber and connected with at least one of the air outlets of the heating and/or air-conditioning device;
wherein said air distribution means further comprise a flap rotatably mounted in the chamber to control the distribution of the air flow between the distribution inlets and the at least one distribution outlet.

The above-described air distribution means allow adjusting the channelling of the air flow from the mixing zone to the various air outlets of the heating and/or air-conditioning device, improving the stratification of the air flow. The main outlet receives air from the main chamber of the mixing zone, while the secondary outlet receives air from the stratification funnel. The stratification funnel is isolated from the duct defined between the main chamber and the main outlet. The two air flows mix with each other after passing through the dual outlet door.

Preferred embodiments of the invention are defined in the dependent claims, which are to be considered an integral part of this description.

Further features and advantages of the device according to the invention will become clearer with the following detailed description of an embodiment of the invention, made with reference to the accompanying drawings, provided purely by way of illustration and not limitation, wherein:
- figure 1 is a schematic sectional view of a heating and/or air-conditioning device according to the invention, in the "full cold" or closed position;
- figure 2 is a view analogous to Figure 1, in an intermediate mixing position;
- figure 3 is a view analogous to the preceding ones, in the "full hot" or open position;
- figure 4 is a partially sectional view of a part of the heating and/or air-conditioning device;
- figure 5 is a perspective view of a part of the box of the heating and/or air-conditioning device, seen from the side opposite to what is shown in Figure 4;
- figures 6 and 7 are respectively a front view and a perspective view of a distribution member of the heating and/or air-conditioning device; and
- figure 8 is a perspective view of a component of the distribution member shown in Figures 6 and 7.

The device shown in the figures comprises a box 10 delimiting an air inlet duct 12 configured to be supplied with an air flow (arrow F1) driven by a centrifugal fan 13. The centrifugal fan 13 conventionally includes a screw 13a and an impeller 13b housed within the screw 13a and operated by an electric motor (not shown). The fan 13 is in turn supplied with an external air flow drawn from outside the vehicle cabin or a recirculation air flow drawn from inside the cabin.

The air inlet duct 12 can house transversally an evaporator E connected to a conventional air-conditioning circuit in such a way as to produce at its outlet an air flow that can be air-conditioned if the evaporator is active.

Downstream, the air inlet duct 12 opens into a section of the air-conditioning device dedicated to mixing hot and cold air streams. At the inlet of this mixing section, the air inlet duct therefore defines an air inlet 14 delimited by opposite walls 15 and 16 formed in the housing 10.

The air inlet 14 defines a convergence zone that supplies, on the one hand, an air transmission branch 26, and on the other hand, an air heating branch 28. The air heating branch 28 is externally delimited by a curved wall 30 of the housing 10 and internally by an inner partition 32. Conversely, the air transmission branch 26 is internally delimited by the inner partition 32 and externally by an extension of wall 16. The branches 26 and 28 communicate with each other both at the convergence zone formed by the air inlet 14 and at another downstream convergence zone 34, which will hereinafter be referred to as the mixing zone.

In the air heating branch 28, one or more heating elements 36a and 36b are housed.

The mixing zone 34 conventionally communicates with various air outlets that serve to distribute the treated air to different areas inside the motor vehicle. For instance, there may be air outlets 37a configured to be connected to vents serving to defrost/defog the vehicle windshield, air outlets 38a configured to be connected to vents positioned at the lower part of the vehicle cabin (foot heating), air outlets 38c configured to be connected to dashboard ventilation vents, and so on.

Within the housing 10, at the mixing section of the air-conditioning device, a mixing member 40 is mounted.

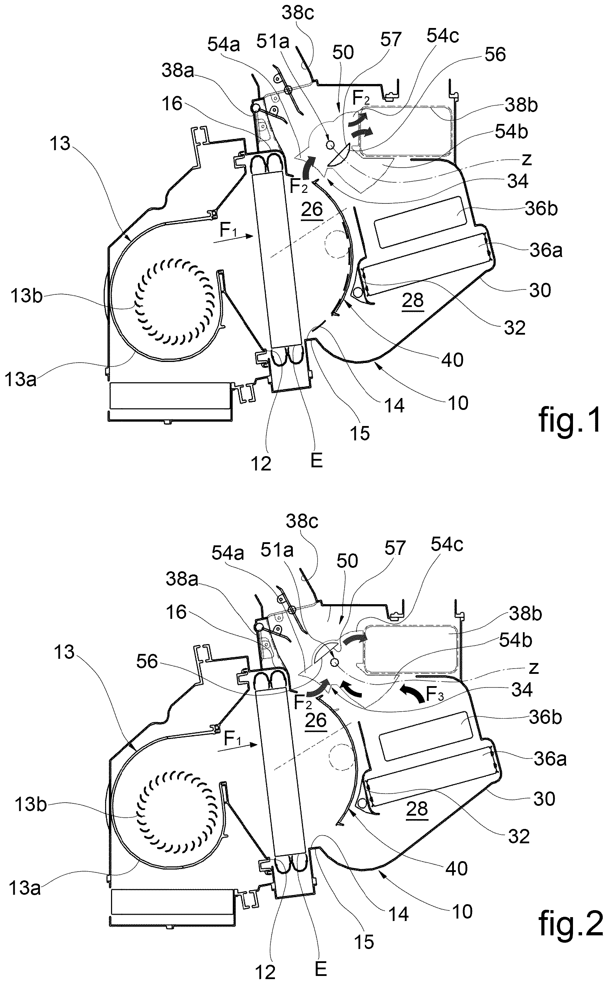

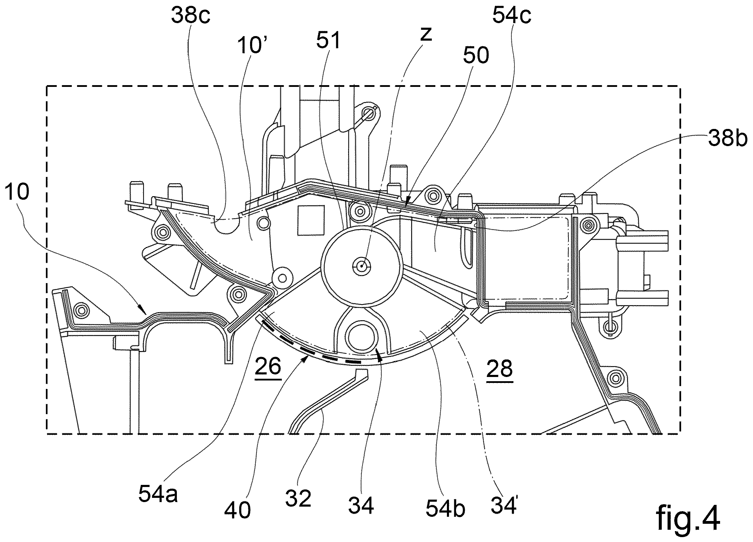

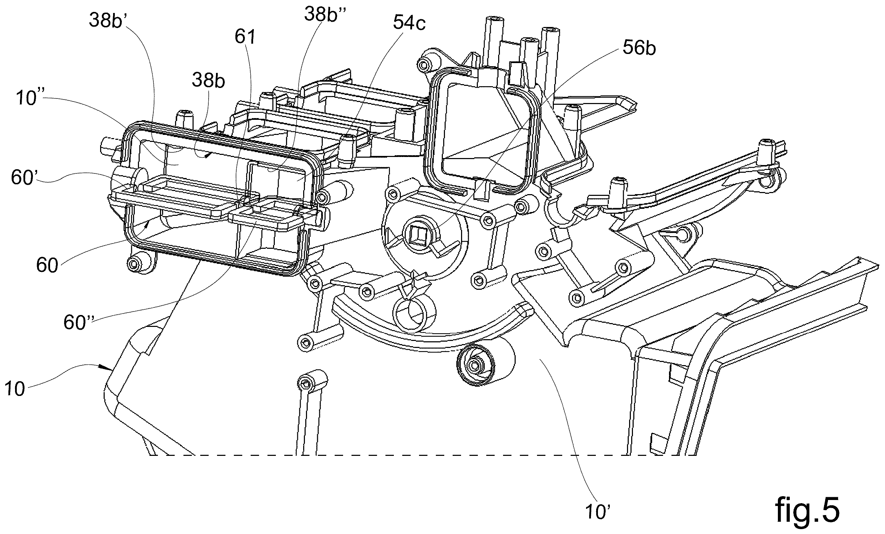

In the example illustrated in Figures 1 to 3, the mixing member 40 is located between the air inlet 14 and the air transmission and heating branches 26 and 28. In an alternative embodiment (shown in Figures 4 and 5), the mixing member 40 can be positioned at the mixing zone 34.

The construction and type of movement of the mixing member 40 are not essential for the purposes of the invention.

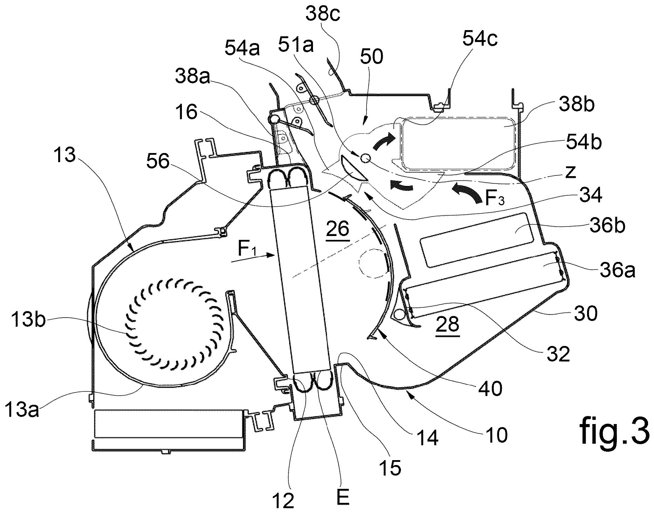

The mixing member 40 is capable of oscillating between two extreme positions:
- a closed or "full cold" position (represented by a dashed line in Figure 1), wherein the mixing member 40 prevents communication between the air inlet 14 and the air heating branch 28 and forces the air flow to pass through the air transmission branch 26, as indicated by the arrows F₂.
- an open or "full hot" position (represented by a dashed line in Figure 3), in which the mixing member 40 prevents communication between the air inlet 14 and the air transmission branch 26 and forces the air flow to pass through the air heating branch 28, as indicated by the arrows F₃.

An intermediate position of the mixing member 40 is shown in Figure 2.

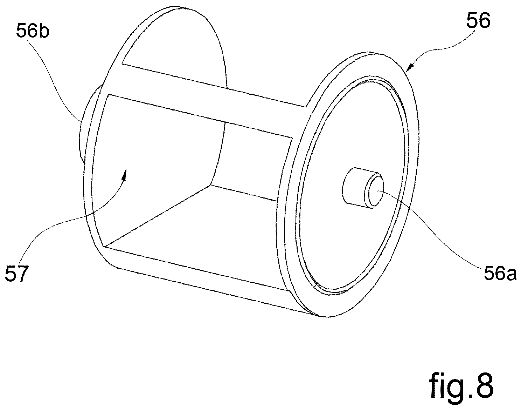

An air distribution member 50 is interposed between the mixing section and the air outlets 38a to 38c of the heating and/or air-conditioning device. This air distribution member 50 is shown in detail in Figures 4 and 6 to 8. In the embodiment of Figures 4 and 5, the air distribution member 50 is located immediately downstream of the mixing member 40. Note that in Figure 4, only the terminal parts of the air transmission branch 26 and air heating branch 28 near the mixing zone 34 are shown. For a description of the remaining part of the heating and/or air-conditioning device, refer to the earlier description of Figures 1 to 3.

The air distribution member comprises an enclosure 51 fixed to the box 10 of the air-conditioning device, at the mixing zone 34. According to alternative embodiments not illustrated, the enclosure 51 could be formed, at least partially, in a single piece with a portion of the box 10 wherein the mixing zone 34 is located.

The enclosure 51 is implemented as a shell comprising a top wall 52 and a plurality of side walls 53b, 53c, and 53d projecting from a peripheral edge of the top wall 52. On the side opposite the top wall 52, the enclosure 51 is open and configured to be coupled to a wall 10' of the box 10.

In cooperation with this wall 10', the enclosure 51 defines within it a stratification funnel comprising a circular chamber 51a from which three ducts 54a, 54b, and 54c extend radially, laterally delimited by the side walls 53b, 53c, and 53d of the enclosure 51. At the convergence of each pair of ducts, the side walls 53b, 53c, and 53d of the enclosure 51 have a respective apical portion extending in a circumferential arc and located at the perimeter of the circular chamber 51a. The enclosure 51 thus defines a first distribution inlet 55a, a second distribution inlet 55b, and a distribution outlet 55c, all facing the circular chamber 51a and interspersed with the aforementioned apical portions of the side walls 53b, 53c, and 53d of the enclosure 51. The duct 54a enters the circular chamber 51a through the first distribution inlet 55a, while the duct 54b enters the circular chamber 51a through the second distribution inlet 55b. The duct 54c departs from the circular chamber 51a through the distribution outlet 55c.

The first distribution inlet 55a and the second distribution inlet 55b are respectively connected to the air transmission branch 26 and the air heating branch 28 through their respective ducts 54a and 54b. The distribution outlet 55c is connected with one of the air outlets 38a to 38c of the heating and/or air-conditioning device through duct 54c. Specifically, the distribution outlet 55c and its associated duct 54c are connected to the foot heating outlet 38b. As can be appreciated in Figure 4, the shape of the enclosure 51 is designed to be coupled with the corresponding passages formed in the box 10 of the air-conditioning device, and specifically with the air transmission branch 26, the air heating branch 28, and the passages leading to the various air outlets 38a to 38c. This coupling concerns only a portion of the extension of these ducts in the vertical direction (orthogonal to the plane of the drawings in Figures 1 to 4). Consequently, only part of the air flows from the air transmission branch 26 and air heating branch 28 is channelled into the enclosure 51. The remaining part follows a parallel path from the mixing zone 34 to the air outlets 38a to 38c, without being involved in the adjustment imparted by the air distribution member 50. In other words, the enclosure 51 divides the mixing zone 34 into a main chamber 34' (which, with respect to the direction orthogonal to the plane of the drawings in Figures 1 to 4, is located above the enclosure 51 and represented by an area enclosed by a dashed-dotted line in Figure 4) and into the stratification funnel 54a, 54b, 51a, 54c enclosed by the enclosure 51, whereby the air flow coming from the air transmission branch 26 and/or the air heating branch 28 can be divided into a main flow fraction passing through the main chamber 34' and a secondary flow fraction passing through the stratification funnel 54a, 54b, 51a, 54c.

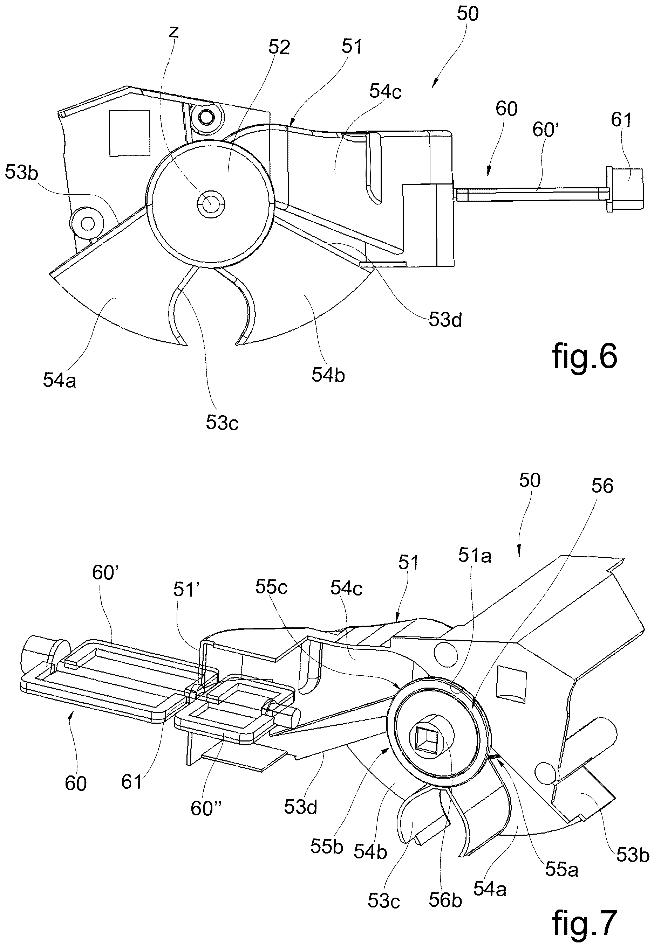

As shown in Figures 5 and 7, the enclosure 51 also includes a septum 51' that divides the air outlet 38b into a main outlet 38b' fluidically connected with the main chamber 34' and a secondary outlet 38b" fluidically connected with the stratification funnel 54a, 54b, 51a, 54c. Specifically, a portion of the enclosure 51 that houses the septum 51' cooperates with the walls of the box 10 of the heating and/or air-conditioning device to define a secondary duct (i.e., duct 54c) connecting the secondary outlet 38b" with the stratification funnel 54a, 54b, 51a, 54c, and a main duct 10" connecting the main outlet 38b' with the main chamber 34' of the mixing zone 34. The septum 51' provides separation between the main duct 10" and the secondary duct 54c.

Associated with the air outlet 38b is an outlet door 60, in particular a rotatable door, comprising a main door sector 60' and a secondary door sector 60" operable to close or open the main outlet 38b' and the secondary outlet 38b" respectively. For the movement of the outlet door 60, an actuator (not shown) is provided. In the illustrated example, the outlet door 60 includes a shaft 61 rotatably mounted on the box 10 of the heating and/or air-conditioning device, and whereon the main door sector 60' and the secondary door sector 60" are positioned. The main door sector 60' and the secondary door sector 60" rotate together with the shaft 61.

Within the circular chamber 5 1a is mounted a drum flap 56 rotatably mounted about a z-axis orthogonal to the directions leading from the first distribution inlet 55a and the second distribution inlet 55b to the distribution outlet 55c respectively. In the illustrated example, the drum flap 56 includes at opposite ends respective pivots 56a and 56b coupled to respective seats formed in the top wall 52 of the enclosure 51 and the wall 10' of the box 10. In particular, the pivot 56b coupled to the wall 10' of the box 10 is configured to be connected to an actuator (not shown) for controlling the drum flap 56.

The drum flap 56 has a body with circular symmetry about the z-axis, through which a passage channel 57 is formed, extending in a diametrical direction.

The drum flap 56 is movable between a first position wherein the passage channel 57 of the drum flap 56 puts the first distribution inlet 55a in communication with the distribution outlet 55c (Figure 1), a second position wherein the passage channel 57 of the drum flap 56 puts the second distribution inlet 55b in communication with the distribution outlet 55c (Figure 3), and at least one intermediate position wherein the passage channel 57 of the drum flap 56 puts both the distribution inlets 55a and 55b in communication with the distribution outlet 55c (Figure 2).

In the first position (Figure 1), the passage channel 57 of the drum flap 56 is aligned with the first distribution inlet 55a and the distribution outlet 55c, while the portion of the drum flap 56 laterally delimiting the passage channel 57 blocks the second distribution inlet 55b. In the second position (Figure 3), the passage channel 57 of the drum flap 56 is aligned with the second distribution inlet 55b and the distribution outlet 55c, while the portion of the drum flap 56 laterally delimiting the passage channel 57 blocks the first distribution inlet 55a. In the third position (Figure 2), the passage channel 57 of the drum flap 56 is arranged to allow air flows from both the air transmission branch 26 and the air heating branch 28 to be simultaneously channelled to the air outlet 38b.

For simplicity, in Figure 1, the air distribution member 50 is shown in the first position, with the mixing member 40 in the closed position; in Figure 2, the air distribution member 50 is shown in an intermediate position, with the mixing member 40 in an intermediate position; and in Figure 3, the air distribution member 50 is shown in the second position, with the mixing member 40 in the open position. However, it should be understood that there is no such fixed relationship between the position of the air distribution member 50 and the position of the mixing member 40; the air distribution member 50 can therefore be adjusted to its different positions for each of the positions of the mixing member 40. While, in general, the position of the mixing member 40 is determined by a control unit of the air-conditioning device based on a temperature setting entered by the user, the position of the air distribution member 50 is automatically set by the control unit based on operational protocols defined by the manufacturer.

Thanks to the above-described arrangement, it is possible to actively adjust the channelling of the air flow from the mixing zone to the various air outlets of the heating and/or air-conditioning device, improving air stratification.

It should be noted that the flap 56 could be a rotatable flap of a type different from a drum door, such as, for instance, a swing flap or a butterfly flap. In this case, the chamber 51a should be adapted to the type of shape and movement of the flap. In any case, it is essential that the flap is movable between a first position wherein the flap puts only the first distribution inlet 55a in communication with the distribution outlet 55c, a second position wherein the flap puts only the second distribution inlet 55b in communication with the distribution outlet 55c, and at least one intermediate position wherein the flap puts both distribution inlets 55a and 55b in communication with the distribution outlet 55c.

In the examples described above, the air distribution member 50 includes two inlet ducts 54a and 54b and one outlet duct 54c. It is possible to envision an air distribution member with two or more outlet ducts connected with two or more air outlets of the heating and/or air-conditioning device, one or more of which is provided with the dual outlet door described above.

## Claims

1. Heating and/or air-conditioning device for a motor vehicle, comprising a mixing section comprising an air transmission branch (26) and an air heating branch (28), both supplied by an air inlet (14) and communicating with each other through a mixing zone (34), and mixing means (40) configured to distribute an air flow between the air transmission branch (26) and the air heating branch (28), wherein said mixing means (40) are movable between two extreme positions, comprising a closed position wherein they prevent communication between the air inlet (14) and the mixing zone (34) through the air heating branch (28) and force the air flow to pass through the air transmission branch (26), and an open position wherein they prevent communication between the air inlet (14) and the mixing zone (34) through the air transmission branch (26) and force the air flow to pass through the air heating branch (28);
air distribution means (50) interposed between the mixing section and a plurality of air outlets (38a, 38b, 38c) of the heating and/or air-conditioning device, said air distribution means (50) being operable to control the distribution of the air flow between said air transmission branch (26) and air heating branch (28) and at least one outlet (38b) of said air outlets (38a, 38b, 38c);
wherein said air distribution means (50) comprise an enclosure (51) arranged at the mixing zone (34), said enclosure (51) dividing the mixing zone (34) into a main chamber (34') and a stratification funnel (54a, 54b, 51a, 54c) enclosed by said enclosure (51), whereby the air flow is dividable into a main flow fraction passing through the main chamber (34') and a secondary flow fraction passing through the stratification funnel (54a, 54b, 51a, 54c);
wherein said enclosure (51) divides said at least one outlet (38b) into a main outlet (38') fluidically connected with the main chamber (34') and into a secondary outlet (38") fluidically connected with the stratification funnel (54a, 54b, 51a, 54c); and
wherein said at least one outlet (38b) is associated with an outlet door (60), comprising a main door sector (60') and a secondary door sector (60"), operable to close or open said main outlet (38') and said secondary outlet (38"), respectively;
**characterized in that** said stratification funnel comprises a chamber (51a) and further comprises a first distribution inlet (55a) and a second distribution inlet (55b) facing the chamber (51a) and respectively connected with the air transmission branch (26) and the air heating branch (28), and at least one distribution outlet (55c) facing the chamber (51a) and connected with at least one of the air outlets (38a, 38b, 38c) of the heating and/or air-conditioning device;
wherein said air distribution means (50) further comprise a flap (56) rotatably mounted in the chamber (51a) to control the distribution of the air flow between the distribution inlets (55a, 55b) and the at least one distribution outlet (55c).

2. Device according to claim 1, wherein the flap (56) is movable between a first position wherein the flap (56) puts only the first distribution inlet (55a) in communication with the at least one distribution outlet (55c), a second position wherein the flap (56) puts only the second distribution inlet (55b) in communication with the at least one distribution outlet (55c), and at least one intermediate position wherein the flap (56) puts both distribution inlets (55a, 55b) in communication with the at least one distribution outlet (55c).

3. Device according to claim 1 or 2, wherein said stratification funnel comprises a plurality of ducts (54a, 54b, 54c) extending radially from the chamber (51a), each duct being respectively connected to one of said distribution inlets and at least one distribution outlet (55a, 55b, 55c).

4. Device according to any of the preceding claims, wherein the enclosure (51) is formed as a shell comprising a top wall (52) and a plurality of side walls (53b, 53c, 53d) projecting from a peripheral edge of the top wall (52), wherein on the side opposite the top wall (52) the enclosure (51) is coupled to a wall (10') of a box (10) of the heating and/or air-conditioning device.

5. The device according to claim 4, wherein the flap (56) is rotationally coupled, at opposite ends, to the top wall (52) of the enclosure (51) and to the wall (10') of the box (10), respectively.
